# EUROPEAN PATENT APPLICATION

(11) **EP 4 095 194 A1**
(43) Date of publication of application: **30.11.2022**
(21) Application number: 21192547.4
(22) Date of filing: 23.08.2021
(51) Int. Cl.: C08L 9/04, C08L 13/02

(54) **LATEX AUXILIARY COMPOSITION FOR PRODUCING LATEX SOLUTION**

(30) Priority: 26.05.2021 TW 110119079
(71) Applicant: Precious Mountain Ent. Corp., 1110 Tortola (VG)
(72) Inventor: LIN, Huang, Taipei City 114066 (TW); HSUN, Hui, Taipei City 114066 (TW)
(74) Representative: Straus, Alexander

(57) **Abstract**

The present invention provides an latex auxiliary composition for producing a latex solution, comprising: a sulfur-free crosslinking agent, which has aluminum oxide, calcium chloride, magnesium oxide, and zirconium dioxide; and a biomass filler, which has sorbitol, polyacrylate, laurate, 1,2-glycerol diacetate, and 1,3-glycerol diacetate; wherein when the sulfur-free crosslinking agent and biomass filler are added to the latex solution, based on 100 parts of the latex, the amount of the sulfur-free crosslinking agent is 0.1~5.0 parts, and the amount of the biomass filler is 0.1∼20.0 parts.

## Description

### BACKGROUND OF THE INVENTION

### 1. Field of the Invention

The present invention relates a latex auxiliary composition for preparing latex gloves. In particular, it relates to an environment-friendly gloves prepared by using a sulfur-free crosslinking agent and a biomass filler as an auxiliary composition.

### 2. Description of the Related Art

In the market, the processing and application fields of nitrile butadiene latex may be roughly divided into two categories: rubber and non-rubber products. The modified carboxyl nitrile butadiene latex is mainly used in dipping gloves, paper processing, oil-resistant sponges, and so on. At the end of the 19th century, the technology of making gloves from natural rubber has been developed. With the increase in the demand for gloves, the proportion of dipping gloves has exceeded 60%. However, because the protein contained in natural rubber may easily cause allergic reactions to users, in recent years, carboxyl nitrile butadiene latex has largely replaced natural latex and become the mainstream raw material for making dipping gloves. Carboxyl nitrile butadiene latex has become the mainstream raw material for making dipped gloves since this kind of latex has better chemical resistance and tensile strength, most manufacturers of dipping gloves may select carboxyl nitrile butadiene latex as the first choice.

The types of dipping gloves may be roughly divided into electronic grade, medical grade, food grade and industrial grade. There are different manufacturing processes according to the required application specifications. The application of carboxyl nitrile butadiene latex in dipping gloves is mainly produced by the cohesion dipping method, and the process can be broadly divided into five stages: latex preparation, coagulant adhesion, latex adhesion, drying and vulcanization, and post-treatment of the glove. In addition to the nature of the latex itself, the main factor that determines the physical properties of the final glove is the auxiliary material used in the latex preparation stage.

Because the types and applicability of gloves produced by various manufacturers are not identical, the latex formulas they develop and use are also slightly different, but the types of auxiliary materials are similar. As shown in Table 1, these are the auxiliary materials used in typical dipping gloves.

**Table 1. The main auxiliary materials used in dipping gloves**

| Auxiliary materials | | | | | | |
|---|---|---|---|---|---|---|
| Sulfur | Zinc oxide | Titanium dioxide | Accelerator | Ammonia/Potassium hydroxide | Leveling agent | Dispersing agent |

It can be found from Table 1 that among the added auxiliary materials, sulfur, zinc oxide, titanium dioxide and accelerators are all inorganic and metal salts, which are water-insoluble and difficult to disperse. Therefore, even the aqueous dispersion obtained from the manufacturer, it is still easy to cause adsorption and self-aggregation after storing for a long time. Therefore, when the manufacturer uses gloves, it must be cautiously stirred or even ground before use. If the process is not rigorous enough, the manufactured auxiliary materials would not be effectively dispersed into the latex, which has a negative impact on properties such as tensile strength, pinhole rate and appearance, and research reports on the effect of sulfur catalysts on the human body about the above auxiliary materials are constantly being reported. Therefore, under the urgent need of the market, a new type of crosslinking agent that may replace the sulfur crosslinking system has also been developed and marketed. This crosslinking agent has excellent film-forming tensile strength without the need for an external sulfur crosslinking agent. In addition to reducing the waste of production costs due to waiting for the maturation time, it also does not need to add low-dispersion sulfur, so that the compounded emulsion has the characteristics of high stability, long-term storage and not easy to precipitate. In addition, because it is not necessary to add sulfur accelerators that affect human health, many manufacturers have introduced sulfur-free crosslinking agent suitable for general carboxyl nitrile butadiene latex, the glove product made by aqueous dispersion contains special metal complexes and the application level is better than the sulfur-containing gloves of the traditional process. If it can be supplemented with appropriate production parameters, electronic grade gloves with high cleanliness requirements can be produced without complicated and not eco-friendly offline washing procedures.

In addition, polymer composite material means a polymer bonded with one or several different materials. In addition to integrating the properties of the original material, this multi-phase material can also be designed according to the needs of the target product, so that the formed composite material has the best performance. As a result, the concept of blending nitrile butadiene rubber and polyvinyl chloride has realized. The main advantage is that it has both the ozone resistance of polyvinyl chloride and the oil resistance and crosslinkability of nitrile butadiene rubber. Therefore, if this concept can be extended to the development of disposable protective gloves, the use of carboxyl nitrile butadiene latex and polyvinyl chloride composite gloves as the main body should be able to solve the shortcomings of the two raw materials in a single product, and then the advantages of both parties may also be combined to produce new products across generations.

The trend of green environmental awareness is gradually rising. If green factors such as biomass can be added into glove products, in addition to the long-awaited expectations of glove manufacturers and end users, they can get rid of bad impression of high pollution and low environmental protection from traditional glove manufacturers and products.

The above information disclosed in this section is only for enhancement of understanding of the background of the described technology and therefore it may contain information that does not form the prior art that is already known to a person of ordinary skill in the art.

### SUMMARY OF THE INVENTION

The main purpose of the present invention is to utilize a modified crosslinking agent and a green biomass auxiliary material that can be directly added to the carboxyl nitrile butadiene latex solution. The modified crosslinking agent and the green biomass auxiliary material are respectively a sulfur-free crosslinking agent and a biomass filler. This special latex auxiliary material system has high dispersibility and stability in the latex solution, and is able to achieve the goal of increasing production capacity and producing green bio-gloves.

Therefore, the present invention provides a latex auxiliary composition for preparing a latex solution, comprising: a sulfur-free crosslinking agent having aluminum oxide, calcium chloride, magnesium oxide, zirconium dioxide or a combination thereof; and a biomass filler having sorbitol, polyacrylate, laurate, 1,2-glycerol diacetate, 1,3-glycerol diacetate, or a combination thereof, wherein when the sulfur-free crosslinking agent and the biomass filler are added to the latex solution, an amount of the sulfur-free crosslinking agent is 0.1∼5.0 parts based on 100 parts of the latex, and an amount of the biomass filler is 0.1∼20.0 parts based on 100 parts of the latex. The weight ratio of sulfur-free crosslinking agent to biomass filler is ranged between 1:200 ∼ 50:1.

In one embodiment of the present invention, a particle size of the sulfur-free crosslinking agent is 10 nm∼5000 nm.

In one embodiment of the present invention, a weight percentage of the sulfur-free crosslinking agent is 0.1 wt% ∼ 50 wt%, preferably 0.1 wt% ∼ 25 wt% based on total weight of the latex solution.

In one embodiment of the present invention, a weight percentage of the biomass filler is 0.1 wt% ∼ 50 wt%, preferably 0.1 wt% ∼ 25 wt% based on total weight of the latex solution.

In one embodiment of the present invention, the polyacrylate has an anionic functional group, a non-ionic functional group or a combination thereof.

In one embodiment of the present invention, the anionic functional group is sulfonate group, carbonate group, carboxylate group or a combination thereof.

In one embodiment of the present invention, the non-ionic functional group is ether group, phenolic group, amine group or a combination thereof.

In one embodiment of the present invention, the latex is carboxyl nitrile butadiene latex.

The present invention further provides a latex composition, which is made by adding aforementioned latex auxiliary composition into the latex solution, comprising: an amount of the sulfur-free crosslinking agent is 0.1∼5.0 parts based on 100 parts of the latex, and an amount of the biomass filler is 0.1∼20.0 parts based on 100 parts of the latex. The weight ratio of sulfur-free crosslinking agent to biomass filler is ranged between 1:200∼50:1.

The present invention also provides a functional auxiliary composition selecting from a group consisting of plasticizers, stabilizers, viscosity reducers, masking agents and nitrile butadiene rubber, which are combined with polyvinyl chloride (PVC) and biomass fillers to form a biomass glove (NITRO-V glove) dipping solution, the preparation method would be described in the embodiment.

In one embodiment of the present invention, among the aforementioned materials, the plasticizer is selected from a group consisting of phthalate, terephthalate and polyester; the stabilizer is a metal soap stabilizer; the viscosity reducer is selected from a group consisting of isoalkane and 2, 2, 4-trimethyl-1, 3-pentanediol isobutyrate; nitrile butadiene rubber is a liquid nitrile butadiene rubber.

The present invention also provides a dipping solution for making gloves, comprising: polyvinyl chloride, a functional auxiliary material and a biomass filler; wherein when the functional auxiliary material and the biomass filler are added to the glove dipping solution, an amount of the functional auxiliary material is 30∼200 parts and an amount of the biomass filler is 0.1∼90.0 parts based on 100 parts of polyvinyl chloride, respectively.

In one embodiment of the present invention, the functional auxiliary material is a plasticizer, a stabilizer, a viscosity reducer, a masking agent, a liquid nitrile butadiene rubber, a biomass filler, and a combination thereof.

In one embodiment of the present invention, the plasticizer is phthalate, terephthalate, polyester or related derivatives.

In one embodiment of the present invention, the stabilizer is a metal soap stabilizer.

In one embodiment of the present invention, the metal soap stabilizer has calcium metal soap and zinc metal soap.

In one embodiment of the present invention, the metal soap stabilizer does not have propanediol, nonylphenol and phenol.

In one embodiment of the present invention, the viscosity reducer includes isoparaffins, 2, 2, 4-trimethyl-1, 3-pentanediol isobutyrate and related derivatives.

In one embodiment of the present invention, the masking agent is titanium dioxide pigment.

In one embodiment of the present invention, the titanium dioxide occupied in the titanium dioxide pigment is more than 93%.

In one embodiment of the present invention, the liquid nitrile butadiene rubber is a copolymer comprising butadiene and acrylonitrile.

In one embodiment of the present invention, an amount of the acrylonitrile is 26∼35% based on the total weight of the copolymer.

In one embodiment of the present invention, the biomass filler is laurate, 1,2-glycerol diacetate or 1,3-glycerol diacetate.

In one embodiment of the present invention, an amount of biomass filler is 0.1 wt% ∼40 wt% based on the total weight of the dipping solution.

The advantage of the present invention is that in addition to environmental protection, it can also be used as industrial grade, medical grade, food grade, electronic grade and other general gloves.

Many of the attendant features and advantages of the present invention will becomes better understood with reference to the following detailed description.

### DETAILED DESCRIPTION OF THE PREFERRED EMBODIMENTS

Reference will now be made in detail to the exemplary embodiments of the present invention. Therefore, it is to be understood that the foregoing is illustrative of exemplary embodiments and is not to be construed as limited to the specific embodiments disclosed, and that modifications to the disclosed exemplary embodiments, as well as other exemplary embodiments, are intended to be included within the scope of the appended claims. These embodiments are provided so that this invention will be thorough and complete, and will fully convey the inventive concept to those skilled in the art.

For convenience, certain terms employed in the specification, examples and appended claims are collected here. Unless defined otherwise, all technical and scientific terms used herein have the same meaning as commonly understood by one of the ordinary skill in the art to which this invention belongs.

Various embodiments will now be described more fully with reference to the accompanying tables, in which illustrative embodiments are shown. The inventive concept, however, may be embodied in various different forms, and should not be construed as being limited only to the illustrated embodiments. Rather, these embodiments are provided as examples, to convey the inventive concept to one skilled in the art. Accordingly, known processes and techniques are not described with respect to some of the embodiments.

The singular forms "a", "and", and "the" are used herein to include plural referents unless the context clearly dictates otherwise.

The main purpose of the present invention is to provide a modified crosslinking agent and a green biomass auxiliary material that may be directly added to the carboxyl nitrile butadiene latex. The modified crosslinking agent and the green biomass auxiliary material are respectively a sulfur-free crosslinking agent and a biomass filler. This special latex auxiliary material system has high dispersibility and stability in the dipping emulsion, and is able to achieve the goal of increasing production capacity and producing green bio-gloves.

The present invention further provides a latex composition, comprising: an amount of the sulfur-free crosslinking agent is 0.1∼5.0 parts based on 100 parts of the latex, and an amount of the biomass filler is 0.1∼20.0 parts based on 100 parts of the latex. The weight ratio of sulfur-free crosslinking agent to biomass filler is ranged between 1:200∼50:1.

The present invention is a latex auxiliary material that can be directly added to carboxyl nitrile butadiene emulsion and has fast dispersion characteristics, and the person having ordinary skill in the art is enabled to put the following technical features into practice.

(1) The present invention provides a latex auxiliary composition, comprising: a sulfur-free crosslinking agent having aluminum oxide, calcium chloride, magnesium oxide, zirconium dioxide or a combination thereof; and a biomass filler having sorbitol, polyacrylate, laurate, 1,2-glycerol diacetate, 1,3-glycerol diacetate, or a combination thereof; wherein the polyacrylate has an anionic functional group, a non-ionic functional group or a combination thereof, the anionic functional group is sulfonate group, carbonate group, carboxylate group or a combination thereof, and the non-ionic functional group is ether group, phenolic group, amine group or a combination thereof.

(2) In the present invention, an amount of the sulfur-free crosslinking agent is 0.1∼5.0 parts based on 100 parts of the latex, and an amount of the biomass filler is 0.1∼20.0 parts based on 100 parts of the latex.

(3) Process: after adding deionized water to the tank, the sulfur-free crosslinking agent and the biomass filler are respectively added into the tank in the required proportions and stir, and then the solution in the tank is added into the carboxyl nitrile butadiene latex. It can be used after mixing evenly; or weighing the required amount of sulfur-free crosslinking agent and biomass filler and then directly adding to the carboxyl nitrile butadiene latex also have the same effect.

Notwithstanding that the numerical ranges and parameters setting forth the broad scope of the invention are approximations, the numerical values set forth in the specific examples are reported as precisely as possible. Any numerical value, however, inherently contains certain errors necessarily resulting from the standard deviation found in the respective testing measurements. Also, as used herein, the term "about" generally means within 10%, 5%, 1%, or 0.5% of a given value or range. Alternatively, the term "about" means within an acceptable standard error of the mean when considered by one of ordinary skill in the art. Other than in the operating/working examples, or unless otherwise expressly specified, all of the numerical ranges, amounts, values and percentages such as those for quantities of materials, durations of times, temperatures, operating conditions, ratios of amounts, and the likes thereof disclosed herein should be understood as modified in all instances by the term "about." Accordingly, unless indicated to the contrary, the numerical parameters set forth in the present invention and attached claims are approximations that can vary as desired. At the very least, each numerical parameter should at least be construed in light of the number of reported significant digits and by applying ordinary rounding techniques.

"Wt. %" means the number of parts by weight of monomer per 100 parts by weight of polymer, or the number of parts by weight of ingredient per 100 parts by weight of composition or material of which the ingredient forms a part.

The following descriptions are provided to elucidate the process of preparing latex auxiliary composition and to aid it of skilled in the art in practicing this invention. These Examples are merely exemplary embodiments and in no way to be considered to limit the scope of the invention in any manner.

### Example

The present invention is described in the following embodiments merely for explanation, which is not intended to limit the scope of the present invention.

### Example 1: medical grade green carboxyl nitrile butadiene latex bio-gloves

The required raw materials were weighted, 100.0 parts of carboxyl nitrile butadiene latex (Kumho KNL830) and 1.3 parts of potassium hydroxide solution were stirred for 30 minutes, and the sulfur-free crosslinking agent (aluminum oxide, calcium chloride, magnesium oxide, and zirconium dioxide) 1.5 parts, zinc oxide dispersion (Sokachem Bostex 422A; 60wt%) 1.5 parts, latex dispersion 0.7 parts (which includes 0.3 parts of anti-sagging agent (JINTEX KBS S-41) and 0.4 parts of dispersant (JINTEX) YOD129S-2)), 1.5 parts of titanium dioxide dispersion (Sokachem Bostex 997A; 70wt%) and biomass fillers (sorbitol, polyacrylate, laurate, 1,2-glyceryl diacetate, and 1,3-glycerol diacetate) 3.0 parts, etc., were sequentially added into the latex tank and stirred together. In other words, the weight ratio of sulfur-free crosslinking agent to biomass filler is ranged between 1:2.The deionized water was added to adjust to the required solid content of the latex, and stirred at room temperature for 12 hours to complete the pre-vulcanization step. The pre-sulfurized latex was filtered with a 200-mesh filter, and directly immersed it in a mold that was coated with a coagulant and dried, and vulcanized it under a baking condition of 120°C for 22 minutes. Finally, after the subsequent cooling, chlorine washing, and secondary material immersion treatments, the preparation of the green biomass carboxyl nitrile butadiene latex gloves was completed. The sulfur-free crosslinking agent, zinc oxide dispersion, latex dispersion, titanium dioxide dispersion, and biomass fillers of the present embodiment can also be placed in the reaction tank of the latex dipping solution for stirring, and the biomass carboxyl butadiene bio-gloves may also be obtained. It should be noted that the materials used in this embodiment are all known materials that are easily available on the market, and these materials are also available for the person having ordinary skills in the art. In addition, the latex is not limited to carboxyl nitrile butadiene latex in this embodiment, other latex may also be used in the present invention.

The sulfur-free crosslinking agent and biomass filler added in the present embodiment have high dispersibility, so that the latex dipping solution not only has the characteristics of not easy to produce precipitation and good stability, but the prepared gloves have higher tensile strength and bright white appearance than the industry requirements. Therefore, in the process of manufacturing gloves of the present invention, both in terms of production and storage stability, it is better than the latex dipping solution formulated with traditional auxiliary materials. In addition, when the sulfur-free crosslinking agent and the biomass filler are combined with carboxyl nitrile butadiene latex, without adding poorly dispersed sulfur and accelerators, it not only saves the long waiting time for maturation, but also greatly improves the cleanliness of the gloves made without increasing multiple complicated cleaning procedures, that is, it has food, medical and electronic grade gloves use standards. In addition, the biomass filler used in the present invention has the advantage of high biocompatibility, so that it has the advantage of environmental protection. The stability of the carboxyl nitrile butadiene latex dipping solution prepared by the auxiliary composition of the present embodiment and the physical properties of the gloves are listed in Table 2 and Table 3, respectively, and their effects are better than those of commercially available gloves prepared by carboxyl nitrile butadiene latex with traditional crosslinking agents (Table 4, Table 5 and Table 6).

**Table 2. Stability of the latex dipping solution prepared in Example 1**

| | Pre-vulcanization for 12 hours, stand after filtering | | |
|---|---|---|---|
| | 0.5 hr | 1.0 hr | 3.0 hrs |
| Dispersibility of auxiliary composition (filter)¹ | No impurities | No impurities | Impurity <0.5%² |

| | | | |
|---|---|---|---|
| 1: The filter is 200 mesh. 2: The calculation method is the weight of the filtered impurities divided by the total weight of added auxiliary composition. | | | |

**Table 3. The application of the glove prepared in Example 1**

| Tensile strength¹ (U.S. standard) | Elongation¹ | Pinhole rate¹ | Tensile strength² (EU. standard) | Appearance | Cleanliness³ (Particle number) |
|---|---|---|---|---|---|
| 33.6Mpa | 590% | AQL <1.0 | 6.3N | Bright | 1930 |

| | | | | | |
|---|---|---|---|---|---|
| 1: The testing methods of tensile strength (U.S. standard), pinhole rate and elongation refer to ASTM D5250-06, AQL means acceptable quality level. 2: The testing method of tensile strength (EU. standard) refers to EN 455. 3: The testing method of cleanliness refers to IEST-RP-CC005.4. | | | | | |

**Table 4. Stability of latex dipping solution prepared by adding traditional crosslinking agent and masking agent.**

| | Pre-vulcanization for 12 hours, stand after filtering | | |
|---|---|---|---|
| | 0.5 hr | 1.0 hr | 3.0 hrs |
| Dispersibility of auxiliary composition (filter)¹ | Impurity <0.1%² | Impurity <0.5%² | Impurity <1.0%² |

| | | | |
|---|---|---|---|
| 1: The filter is 200 mesh. 2: The calculation method is the weight of the filtered impurities divided by the total weight of added auxiliary composition. | | | |

**Table 5. The application of the glove prepared by adding traditional crosslinking agent**

| Tensile strength¹ (U.S. standard) | Elongation¹ | Pinhole rate¹ | Tensile strength² (EU. standard) | Appearance | Cleanliness³ (Particle number) |
|---|---|---|---|---|---|
| 31.4Mpa | 585% | AQL <1.0 | 6.2 N | Bright | >6000 |

| | | | | | |
|---|---|---|---|---|---|
| 1: The testing methods of tensile strength (U.S. standard), pinhole rate and elongation refer to ASTM D5250-06, AQL means acceptable quality level. 2: The testing method of tensile strength (EU. standard) refers to EN 455. 3: The testing method of cleanliness refers to IEST-RP-CC005.4. | | | | | |

### Example 2: preparation of electronic grade and food grade green carboxyl nitrile butadiene latex bio-gloves

The sulfur-free crosslinking agent was increased to 2.0 parts, while the amount of zinc oxide dispersion (60 wt%) was reduced to 1.0 part, and the amount of other ingredients remained unchanged. Under the same preparation conditions of gloves as in Example 1, the physical properties and application of the formulated latex dipping solution are listed in Table 6 and Table 7, respectively.

**Table 6. Stability of the latex dipping solution prepared in Example 2**

| | Pre-vulcanization for 12 hours, stand after filtering | | |
|---|---|---|---|
| | 0.5 hr | 1.0 hr | 3.0 hrs |
| Dispersibility of auxiliary composition (filter)¹ | No impurities | No impurities | No impurities |

| | | | |
|---|---|---|---|
| 1: The filter is 200 mesh. 2: The calculation method is the weight of the filtered impurities divided by the total weight of added auxiliary composition. | | | |

**Table 7. The application of the gloves prepared in Example 2**

| Tensile strength¹ | Elongation¹ | Appearance | Cleanliness² (Particle number) | Zinc dissolution amount³ (ppm) |
|---|---|---|---|---|
| 30.6Mpa | 620% | Bright | 1650 | 9.5 |

| | | | | |
|---|---|---|---|---|
| 1: The testing methods of tensile strength refers to ASTM D5250-06. 2: The testing method of cleanliness refers to IEST-RP-CC005.4. 3: The testing method of zinc dissolution amount refers to Japan Food Sanitation Act. No.370. | | | | |

### Example 3: preparation of easy-to-wear green carboxyl nitrile butadiene latex bio-gloves

Additional 1.0% of biomass filler was added to the secondary material, while the amount of other ingredients remained unchanged. Under the same preparation conditions of gloves as in Example 1, the physical properties and application of the bio-gloves made by green carboxyl nitrile butadiene latex are listed in Table 8.

**Table 8. The application of the glove prepared in Example 3**

| Tensile strength¹ | Elongation¹ | Appearance | Wearing gloves after washing hands² |
|---|---|---|---|
| 32.2Mpa | 575% | Bright | Smooth |

| | | | |
|---|---|---|---|
| 1: The testing method of tensile strength refers to ASTM D5250-06. 2: The testing method of wearing gloves after washing hands is that wash and dry the hands before wearing gloves. | | | |

### Example 4: online production of green carboxyl nitrile butadiene latex bio-gloves

The production line was produced with the formulas and process parameters of Examples 1, 2 and 3, and the production speed of the production line was 150 pieces/minute, and with the help of an automatic demoulding machine, the physical properties and application of the green carboxyl nitrile butadiene latex bio-gloves produced by the production line are listed in Table 9, Table 10 and Table 11, respectively.

**Table 9. The application of gloves produced in the production line using the formula and process parameters of Example 1**

| Tensile strength¹ (U.S. standard) | Elongation¹ | Pinhole rate¹ | Tensile strength² (EU. standard) | Appearance | Cleanliness³ (Particle number) |
|---|---|---|---|---|---|
| 32.1Mpa | 598% | AQL <1.0 | 6.4N | Bright | 1720 |

| | | | | | |
|---|---|---|---|---|---|
| 1: The testing methods of tensile strength (U.S. standard), pinhole rate and elongation refer to ASTM D5250-06, AQL means acceptable quality level. 2: The testing method of tensile strength (EU. standard) refers to EN 455. 3: The testing method of cleanliness refers to IEST-RP-CC005.4. | | | | | |

**Table 10. The application of gloves produced in the production line using the formula and process parameters of Example 2**

| Tensile strength¹ | Elongation¹ | Appearance | Cleanliness² (Particle number) | Zinc dissolution amount³ (ppm) |
|---|---|---|---|---|
| 31.2Mpa | 600% | Bright | 1210 | 7.3 |

| | | | | |
|---|---|---|---|---|
| 1: The testing methods of tensile strength refers to ASTM D5250-06. 2: The testing method of cleanliness refers to IEST-RP-CC005.4. 3: The testing method of zinc dissolution amount refers to Japan Food Sanitation Act. No.370. | | | | |

**Table 11. The application of the glove prepared in Example 3**

| Tensile strength¹ | Elongation¹ | Appearance | Wearing gloves after washing hands² |
|---|---|---|---|
| 33.6Mpa | 580% | Bright | Smooth |

| | | | |
|---|---|---|---|
| 1: The testing method of tensile strength refers to ASTM D5250-06. 2: The testing method of wearing gloves after washing hands is that wash and dry the hands before wearing gloves. | | | |

### Example 5: preparation of NITRO-V bio-gloves

This embodiment additional provides a functional auxiliary composition prepared by a suitable plasticizer, stabilizer, viscosity reducer, masking agent, nitrile butadiene rubber, etc., and the functional auxiliary composition was combined with polyvinyl chloride (PVC) and biomass filler to form gloves. The production process was as follows: 2.5 parts of liquid nitrile butadiene rubber, 75 parts of plasticizer (50 parts of BIOCIZER, 15 parts of DOTP and 10 parts of DINCH), were mixed and stirred for 30 minutes, and 100 parts of PVC powder were added to stir. After adding the PVC powder, 3.25 parts of stabilizer, 50 parts of viscosity reducer, 2 parts of titanium dioxide as a masking agent, were sequentially added and stirred for 4-5 hours. After that, vacuum degassing for more than 24 hours, add 10 parts of viscosity reducer was added to adjust the viscosity and filter through three layers of 180 mesh filters, the paste was sent to the hopper through a specific pipeline. The mold enters the trough for immersion along the track of the production line, and lifts the material from the trough to leave. The solution in the trough was kept stable during the production process. The temperature of the paste in the trough was controlled at 48∼60°C. Before replacement, the mold was preheated to 65°C~85°C. The mold was elongated and dropped into the oven for baking, the baking temperature was 160°C∼230°C, and the baking time is 4-9 minutes. After the second material immersion treatment, the preparation of NITRO-V gloves was completed. It should be noted that the materials used in this embodiment are all known materials that are easily available on the market, and these materials are also available for the person having ordinary skills in the art.

### Example 6: preparation of PVC bio-gloves

Compared with Example 5, the raw material used in this embodiment is only lack of nitrile butadiene rubber. The production process was as follows: 75 parts of plasticizer (50 parts of BIOCIZER, 15 parts of DOTP and 10 parts of DINCH), were mixed and stirred for 30 minutes, and 100 parts of PVC powder were added to stir. After adding the PVC powder, 3.25 parts of stabilizer, 50 parts of viscosity reducer, 2 parts of titanium dioxide as a masking agent, were sequentially added and stirred for 4-5 hours. After that, vacuum degassing for more than 24 hours, add 5 parts of viscosity reducer was added to adjust the viscosity and filter through three layers of 180 mesh filters, the paste was sent to the hopper through a specific pipeline. The mold enters the trough for immersion along the track of the production line, and lifts the material from the trough to leave. The solution in the trough was kept stable during the production process. The temperature of the paste in the trough was controlled at 48∼60°C. Before replacement, the mold was preheated to 65°C∼85°C. The mold was elongated and dropped into the oven for baking, the baking temperature was 160°C∼230°C, and the baking time is 4-9 minutes. After the second material immersion treatment, the preparation of NITRO-V gloves was completed. It should be noted that the materials used in this embodiment are all known materials that are easily available on the market, and these materials are also available for the person having ordinary skills in the art.

It will be understood that the above description of embodiments is given by way of example only and that various modifications may be made by those with ordinary skill in the art. The above specification, examples, and data provide a complete description of the present invention and use of exemplary embodiments of the invention. Although various embodiments of the invention have been described above with a certain degree of particularity, or with reference to one or more individual embodiments, those with ordinary skill in the art could make numerous alterations to the disclosed embodiments without departing from the spirit or scope of this invention.

## Claims

1. A latex auxiliary composition for preparing a latex solution, comprising:
a sulfur-free crosslinking agent, having aluminum oxide, calcium chloride, magnesium oxide, and zirconium dioxide; and
a biomass filler having sorbitol, polyacrylate, laurate, 1,2-glycerol diacetate, and 1,3-glycerol diacetate,
wherein when the sulfur-free crosslinking agent and the biomass filler are added to the latex solution, an amount of the sulfur-free crosslinking agent is 0.1∼5.0 parts based on 100 parts of the latex, and an amount of the biomass filler is 0.1∼20.0 parts based on 100 parts of the latex,
wherein the polyacrylate has an anionic functional group, a non-ionic functional group or a combination thereof,
wherein the latex is carboxyl nitrile butadiene latex.

2. The latex auxiliary composition as defined in claim 1, wherein weight ratio of the sulfur-free crosslinking agent to the biomass filler is 1:2.

3. The latex auxiliary composition as defined in claim 1, wherein weight percentage of the sulfur-free crosslinking agent is 0.1 wt%∼50 wt% based on total weight of the latex solution.

4. The latex auxiliary composition as defined in claim 1, wherein weight percentage of the biomass filler is 0.1 wt%∼50 wt% based on total weight of the latex solution.

5. The latex auxiliary composition as defined in claim 1, wherein weight ratio of the sulfur-free crosslinking agent to the biomass filler is 2:3.

6. The latex auxiliary composition as defined in claim 1, wherein the anionic functional group is sulfonate group, carbonate group, carboxylate group or a combination thereof.

7. The latex auxiliary composition as defined in claim 1, wherein the non-ionic functional group is ether group, phenolic group, amine group or a combination thereof.

8. The latex auxiliary composition as defined in claim 1, comprising zinc oxide and titanium dioxide.
